(19)

Europäisches
Patentamt
European
Patent Office
Office européen
des brevets

(11) **EP 2 459 933 B1**

(12) **EUROPEAN PATENT SPECIFICATION**

(45) Date of publication and mention
of the grant of the patent:
**09.07.2014 Bulletin 2014/28**

(51) Int Cl.:
*F23R 3/36* (2006.01)    *F23N 1/00* (2006.01)
*F02C 7/22* (2006.01)    *F02C 9/40* (2006.01)

(21) Application number: **10773967.4**

(22) Date of filing: **28.07.2010**

(86) International application number:
**PCT/IB2010/001865**

(87) International publication number:
**WO 2011/012985 (03.02.2011 Gazette 2011/05)**

(54) **METHOD AND ASSEMBLY FOR SUPPLYING FUEL TO A COMBUSTION CHAMBER OF A GAS
TURBINE PLANT**

VERFAHREN UND ANORDNUNG FÜR DIE BRENNSTOFFZUFUHR ZU EINER
VERBRENNUNGSKAMMER EINER GASTURBINENANLAGE

PROCÉDÉ ET ENSEMBLE POUR LA FOURNITURE DE CARBURANT À UNE CHAMBRE DE
COMBUSTION D'UNE INSTALLATION À TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.07.2009 IT MI20091370**

(43) Date of publication of application:
**06.06.2012 Bulletin 2012/23**

(73) Proprietor: **Ansaldo Energia S.p.A.**
**Genova (IT)**

(72) Inventors:
• **BONZANI, Federico**
**I-16156 Genova (IT)**

• **DELLA FIORE, Lorena**
**I-16155 Genova (IT)**
• **ZITO, Domenico**
**I-16154 Genova (IT)**

(74) Representative: **Andreotti, Erika et al**
**Studio Torta S.p.A.**
**Via Viotti, 9**
**IT-10121 Torino (IT)**

(56) References cited:
**EP-A1- 1 649 219      WO-A1-2008/081488
JP-A- 8 170 544        JP-A- 11 324 714
JP-A- 63 143 339       US-A1- 2003 056 517
US-A1- 2004 172 951    US-A1- 2006 016 198**

EP 2 459 933 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

TECHNICAL FIELD

The present invention concerns an assembly and a method for fuelling a combustion chamber of a gas turbine plant.

BACKGROUND ART

In recent years, the gas turbine sector for the production of electricity has experienced an increase in the use of gas fuels alternative to natural gas. In particular, from the gases alternative to natural gas, lean gases having low calorific values are referred, such as, for example, gases derived from biomass gasification processes, gases derived from refinery processes, steelworks gases, etc.

In particular, steelworks gases are produced during steel manufacturing processes and generally include blast furnace gas, also known as BFG (Blast Furnace Gas), coke-oven gas, also known as COG (Coke Oven Gas), and oxygen gas, also known as LDG (Linz-Donawitz Gas).

Steelworks gases of the above-described type are characterized by a low calorific value and by a fluctuating availability, mainly due to the fact that they derive from non-continuous production processes at the steelworks.

Energy generation plants fuelled with this type of gas are therefore subject to sudden changes in the quantity and quality of the fuel, with adverse effects in terms of efficiency. An example of a plant of this type is disclosed in the document US 2003/056517.

DISCLOSURE OF INVENTION

One object of the present invention is that of providing a method for supplying a combustion chamber of a gas turbine plant that overcomes the drawbacks of the known art pointed out herein; in particular, an object of the invention is that of providing a method for supplying fuel to a combustion chamber of a gas turbine plant that is simple and effective.

In accordance with these objects, the present invention concerns a method for supplying fuel to a combustion chamber of a gas turbine plant as claimed in claim 1.

A further object of the invention is that of making an assembly for supplying fuel to a combustion chamber of a gas turbine plant that is simple and able to resolve the problems of the known art.

In accordance with these objects, the present invention concerns an assembly for supplying fuel to a combustion chamber of a gas turbine plant as claimed in claim 4.

BRIEF DESCRIPTION OF THE DRAWINGS

further characteristics and advantages of the present invention will become clear from the description that follows of a non-limitative embodiment thereof, with reference to the figures in the enclosed drawings, where:

- Figure 1 is a schematic view of a gas turbine plant including an assembly for supplying fuel to a combustion chamber according to the present invention,
- Figure 2 is a schematic view of a detail of the assembly for supplying fuel in Figure 1, and
- Figure 3 is a flow chart schematically explaining some of the steps of the method for supplying fuel to a combustion chamber according to the present invention.

BEST MODE FOR CARRYING OUT THE INVENTION

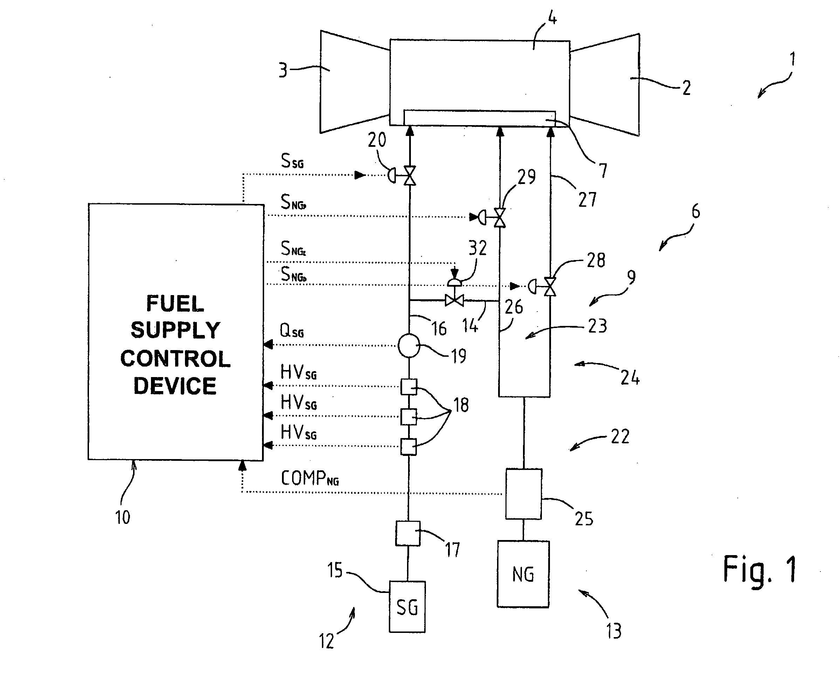

In Figure 1, reference numeral 1 indicates a plant for generating electricity comprising a gas turbine 2, a compressor 3, a combustion chamber 4 and a fuel supplying assembly 6 for supplying fuel to the combustion chamber 4.

The combustion chamber 4 is preferable of the silo type and comprises at least one burner 7, only schematically represented in Figure 1. Preferably, the combustion chamber 4 comprises eight burners 7 for each silo (not shown in the enclosed figures for motives of simplicity).

The burner 7 is capable of being fuelled with natural gas and with lean gas and is preferable of the type described in patent EP1649219B in the name of the applicant. Here and henceforth, the term lean gas is intended to indicate a gas having a low calorific value, such as steelworks gas for example.

The fuel supplying assembly 6 comprises a fuel supply circuit 9 and a fuel supply control device 10.

The fuel supply circuit 9 comprises a lean gas supply line 12, a natural gas supply line 13 and a connecting conduit 14.

The lean gas supply line 12 comprises a gasometer 15 containing lean gas, a lean gas supply conduit 16, which connects the gasometer 15 to the burner 7 of the combustion chamber 4, a compressor station 17, three calorimeters 18, a flow meter 19 and a lean gas supply valve 20.

The gasometer 15 substantially acts as a stabilizer i.e. a sort of "flywheel" for the lean gas. For example, in the case of steelworks gas, the gasometer 15 collects the gases produced during the steel manufacturing processes and helps to stabilize the pressure oscillations due to the continual changes in the flow rate of the gases coming from the steelworks.

The calorimeters 18 are arranged in series along the lean gas supply conduit 16 downstream of the compressor station 17.

Each calorimeter 18 is configured for measuring the calorific value $HV_{SG}$ of the lean gas leaving the compressor station 17.

The calorimeters 18 provide the respective measured value of the calorific value $HV_{SG}$ at the fuel supply control device 10. If two of the three calorimeters 18 fail, the fuel supply control device 10 generates an alarm that activates blocking of the supply of lean gas.

Here and henceforth, calorific value HV is intended as the amount of heat generated by the complete combustion of a unit volume of gas. Calorific value is measured in MJ/kg.

The flow meter 19 measures the lean gas flow rate $Q_{SG}$ that flows along the lean gas supply line 12 and provides the measurement taken of the lean gas flow rate $Q_{SG}$ to the fuel supply control device 10.

The lean gas supply valve 20 is a regulator valve, the opening of which is controlled by the fuel supply control device 10 by means of a control signal $S_{SG}$.

The natural gas supply line 13 comprises a main delivery line 22, which is subdivided into a pilot delivery line 23 and a diffuser delivery line 24.

A variant (not shown) of the present invention envisages the main delivery line 22 being subdivided into three delivery lines: a pilot delivery line, a diffuser delivery line and a premix delivery line.

The main delivery line 22 comprises a gas cromatograph 25, which measures the natural gas composition $COMP_{NG}$ and sends it to the fuel supply control device 10.

The pilot delivery line 23 comprises a pilot conduit 26 and a pilot valve 29, which is arranged along the pilot conduit 26 and is controlled by the fuel supply control device 10 by means of a control signal $S_{NGp}$.

The diffuser delivery line 24 comprises a diffuser conduit 27 and a diffuser valve 28, which is placed along the diffuser conduit 27 and is controlled by the fuel supply control device 10 by means of a control signal $S_{NGd}$.

The connecting conduit 14 connects the pilot conduit 26 with the lean gas supply conduit 16; in particular, the point of connection of the connecting conduit 14 to the lean gas supply conduit 16 is placed upstream of the lean gas supply valve 20.

A connecting valve 32, the opening of which is controlled by the fuel supply control device 10 by means of a control signal $S_{NGc}$, is placed along the connecting conduit 14.

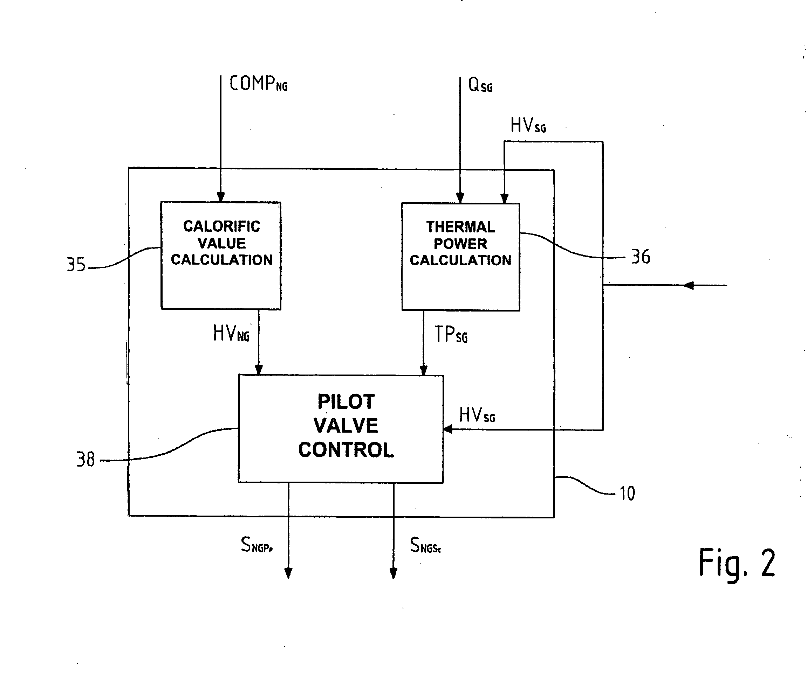

With reference to Figure 2, the fuel supply control device 10 comprises a calorific-value-calculating module 35, a thermal-power-calculating module 36 and a pilot valve control module 38.

The calorific-value-calculating module 35 calculates the natural gas calorific value $HV_{NG}$ on the basis of the natural gas composition $COMP_{NG}$ measured by the gas cromatograph 25.

The thermal-power-calculating module 36 calculates the thermal power of the lean gas $TP_{SG}$ on the basis of the lean gas flow rate $Q_{SG}$ measured by the flow meter 19 and on the basis of the lean gas calorific value $HV_{SG}$ measured by means of the calorimeters 18.

In particular, the calculation of the thermal power of the lean gas $TP_{SG}$ is performed according to this formula:

$$TP_{SG} = Q_{SG} \cdot HV_{SG}$$

Essentially, the thermal power $TP_{SG}$ expresses the heat generated per unit time by the combustion of the current flow rate of lean gas $Q_{SG}$ in the combustion chamber 4. Thermal power $TP_{SG}$ is expressed in KJ/s.

The pilot valve control module 38 is configured to calculate the natural gas flow rate $Q_{NGp}$ to be supplied to the combustion chamber 4 through the pilot conduit 26 and the natural gas flow rate $Q_{NGc}$ to be supplied to the lean gas supply line 12 through the connecting conduit 14, and to send control signals $S_{NGp}$ and $S_{NGc}$ to the pilot valve 29 and connecting valve 32 respectively.

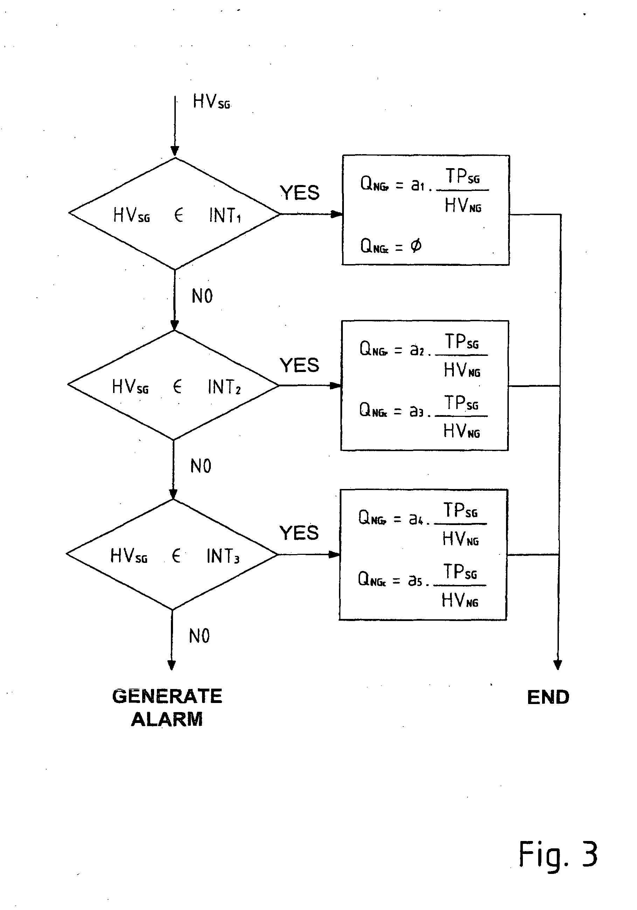

A flowchart is shown in Figure 3 that outlines the operational steps implemented by the pilot valve control module 38.

The pilot valve control module 38 is configured to calculate whether the lean gas calorific value $HV_{SG}$ is included in one or more preset ranges and to set, on the basis of the value of the lean gas calorific value $HV_{SG}$, the control signal $S_{SGp}$ for operating the pilot valve 29 and the control signal $S_{SGc}$ operating the connecting valve 32.

In the non-limitative example described and illustrated herein, there are three preset ranges, as follows:

$INT_1$: 5-5,5 MJ/kg
$INT_2$: 4 - 5 MJ/kg
$INT_3$: 3,8-4 MJ/kg

In particular, if the lean gas calorific value $HV_{SG}$ is within range $INT_1$, the natural gas flow rate $Q_{NGc}$ to be supplied to the lean gas supply line 12 through the connecting conduit 14 is null, while the natural gas flow rate $Q_{NGp}$ to be supplied to the combustion chamber 4 through the pilot conduit 26 is calculated according to the following formula:

$$Q_{NGp} = a_1 \cdot \frac{TP_{SG}}{HV_{NG}}$$

where:

$HV_{NC}$ is the natural gas calorific value calculated by the calorific-value-calculating module 35,
$TP_{SG}$ is the thermal power of the lean gas calculated by the thermal-power-calculating module 36, and

$a_1$ is a coefficient and is preferably between 0,10 and 0,15.

In particular, the choice of the value for coefficient $a_1$ is made on the basis of power and consumption needs. For example, during the daytime, when energy requirements are greater and energy is sold at high prices, $a_1$ is preferably high and equal to approximately 0,15, while during the night, when energy requirements are lower and energy is sold at the lowest prices, $a_1$ is preferably at a minimum and equal to approximately 0,10.

If the lean gas calorific value $HV_{SG}$ is in range $INT_2$, the natural gas flow rate $Q_{NGp}$ to be supplied to the combustion chamber 4 through the pilot conduit 26 is calculated according to the following formula:

$$Q_{NGp} = a_2 \cdot \frac{TP_{SG}}{HV_{NG}}$$

where:

$HV_{NG}$ is the natural gas calorific value calculated by the calorific-value-calculating module 35,
$TP_{SG}$ is the thermal power of the lean gas calculated by the thermal-power-calculating module 36, and
$a_2$ is a coefficient and is preferably equal to 0,15.

The natural gas flow rate $Q_{NGc}$ to be supplied to the lean gas supply line 12 through the connecting conduit 14 is instead calculated according to the following formula:

$$Q_{NGc} = a_3 \cdot \frac{TP_{SG}}{HV_{NG}}$$

where:

$HV_{NG}$ is the natural gas calorific value calculated by the calorific-value-calculating module 35,
$TP_{SG}$ is the thermal power of the lean gas calculated by the thermal-power-calculating module 36, and
$a_3$ is a coefficient and is preferably set as $a_3=a_4-a_2$, where $a_4$ is preferably between 0,15 and 0,3 and $a_2$ is preferably equal to 0,15.

In particular, the choice of the value for coefficient $a_4$ is made on the basis of power and consumption needs. For example, during the daytime, $a_4$ is preferably high and equal to approximately 0,30, while during the night, $a_4$ is preferably at a minimum and equal to approximately 0,15.

If the calorific value of the steelworks gas $HV_{SG}$ is in range $INT_3$, the natural gas flow rate $Q_{NGp}$ to be supplied to the combustion chamber 4 through the pilot conduit 26 is calculated according to the following formula:

$$Q_{NGp} = a_5 \cdot \frac{TP_{SG}}{HV_{NG}}$$

where:

$HV_{NG}$ is the natural gas calorific value calculated by the calorific-value-calculating module 35,
$TP_{SG}$ is the thermal power of the steelworks gas calculated by the thermal-power-calculating module 36, and
$a_5$ is a coefficient and is preferably equal to 0,15.

The natural gas flow rate $Q_{NGc}$ to be supplied to the lean gas supply line 12 through the connecting conduit 14 is instead calculated according to the following formula:

$$Q_{NGc} = a_6 \cdot \frac{TP_{SG}}{HV_{NG}}$$

where:

$HV_{NG}$ is the natural gas calorific value calculated by the calorific-value-calculating module 35,
$TP_{SG}$ is the thermal power of the lean gas calculated by the thermal-power-calculating module 36, and
$a_6$ is a coefficient and is preferably set as $a_6=a_7-a_5$, where $a_7$ is preferably between 0,3 and 0,4 and $a_5$ is preferably equal to 0,15.

In particular, the choice of the value for coefficient $a_7$ is made on the basis of power and consumption needs..For example, during the daytime, $a_7$ is preferably high and equal to approximately 0,4, while during the night, $a_7$ is preferably at a minimum and equal to approximately 0,3.

The control signal $S_{NGp}$ generated by the pilot valve control module 38 is such as to enable the passage of the natural gas flow rate $Q_{NGp}$ through the pilot conduit 26, while the control signal $S_{NGc}$ is such as to enable the passage of the natural gas flow rate $Q_{NGc}$ through the connecting conduit 14.

If the lean gas calorific value $HV_{SG}$ does not fall within any of the preset ranges, the pilot valve control module 38 generates an alarm that, preferably, activates blocking of the supply of lean gas.

Advantageously, the method and the assembly for supplying fuel to a combustion chamber according to the present invention enable the operation of a plant fuelled by gas of low calorific value whilst guaranteeing high performance and minimum consumption of natural gas.

Furthermore, thanks to the constant integration of natural gas, the method and the assembly for supplying fuel to a combustion chamber according to the present invention enable continual operation of the plant even in situations where the available amount of lean gas is scarce.

Finally, it is evident that modifications to and variants of the method and the assembly for supplying fuel to a combustion chamber described herein can be made without departing from the scope of the enclosed claims.

**Claims**

1. Method for supplying fuel to a combustion chamber (4) of a gas turbine plant (1) comprising the steps of:

   - supplying lean gas to the combustion chamber (4) through a lean gas supply line (12) of the plant (1);
   - supplying natural gas to the combustion chamber (4) through a natural gas supply line (13) of the plant (1), which comprises a pilot delivery line (23);

   the method being **characterized by** the fact that the step of supplying natural gas comprises the steps of:

   - measuring a lean gas calorific value ($HV_{SG}$);
   - calculating at least a first natural gas flow rate ($Q_{NGp}$) to be supplied to the combustion chamber (4) through the pilot delivery line (23) on the basis of the measured lean gas calorific value ($HV_{SC}$);
   - supplying at least the first natural gas flow rate ($Q_{NGp}$) to the combustion chamber (4) through the pilot delivery line (23);
   - calculating a second natural gas flow rate ($Q_{NGc}$) to be supplied to the lean gas supply line (12) on the basis of the measured lean gas calorific value ($HV_{SG}$);
   - supplying the second natural gas flow rate ($Q_{NGc}$) to the lean gas supply line (12) through a connecting conduit (14), which connects the pilot delivery line (23) with the lean gas supply line (12).

2. Method according to claim 1, wherein the step of supplying natural gas comprises the steps of:

   - measuring a natural gas calorific value ($HV_{NG}$);
   - measuring the lean gas flow rate ($Q_{SG}$) that flows along the lean gas supply line (12);
   - calculating at least the first natural gas flow rate ($Q_{NGp}$) to be supplied to the combustion chamber (4) through the pilot delivery line (23) on the basis of the lean gas flow rate ($Q_{SG}$) and the ratio between the lcan gas calorific value ($HV_{SG}$) and the natural gas calorific value ($HV_{NG}$).

3. Method according to claim 1 or 2, wherein the step of supplying natural gas comprises the steps of:

   - measuring a natural gas calorific value ($HV_{NG}$);
   - measuring the lean gas flow rate ($Q_{SG}$) that flows along the lean gas supply line (12);
   - calculating the second natural gas flow rate ($Q_{NGc}$) to be supplied to the lean gas supply line (12) on the basis of the lean gas flow rate ($Q_{SG}$) and the ratio between the lean gas calorific value ($HV_{SG}$) and the natural gas calorific value ($HV_{NG}$).

4. Assembly for supplying fuel to a combustion chamber (4) of a gas turbine plant (1) comprising:

   - a fuel supply circuit (9) comprising a lean gas supply line (12) and a natural gas supply line (13), which comprises a pilot delivery line (23);
   - a fuel supply control device (10);

   the assembly (6) being **characterized by** the fact that the lean gas supply line (12) comprises at least a first device (18) for measuring a lean gas calorific value ($HV_{SG}$) and by the fact that the fuel supply control device (10) is configured to calculate, on the basis of the lean gas calorific value ($HV_{SG}$) measured by the first device (18), at least a first natural gas flow rate ($Q_{NGp}$) to be supplied Lo the combustion chamber (4) through the pilot delivery line (23); wherein the fuel supply control device (10) is configured to calculate, on the basis of the lean gas calorific value ($HV_{SG}$) measured by the first device (18), a second natural gas flow rate ($Q_{NGc}$) to be supplied to the lean gas supply line (12); the fuel supply circuit (9) comprising a connecting conduit (14) that connects the pilot delivery line (23) with the lean gas supply line (12), the second natural gas flow rate ($Q_{NGc}$) being supplied to the lean gas supply line (12) through the connecting conduit (14).

5. Assembly according to claim 4, wherein the natural gas supply line (13) comprises a second device (25) for measuring a natural gas composition ($COMP_{NG}$).

6. Assembly according to claim 5, wherein the fuel supply control device (10) comprises a calorific-value-calculating module (35) configured to calculate the natural gas calorific value ($HV_{NG}$) on the basis of the natural gas composition ($COMP_{NG}$) measured by the second device (25).

**7.** Assembly according to any one of claims 4 to 6, wherein the lean gas supply line (12) comprises a third device (19) for measuring a lean gas flow rate ($Q_{SG}$) that flows along the lean gas supply line (12).

**8.** Assembly according to claim 7 depending from claim 6, wherein the fuel supply control device (10) is configured to calculate the first natural gas flow rate ($Q_{NCp}$) to be supplied to the combustion chamber (4) through the pilot delivery line (23) on the basis of the measured lean gas flow rate ($Q_{SG}$) and on the basis of the ratio between the measured lean gas calorific value ($HV_{SG}$) and the natural gas calorific value ($HV_{NG}$.

**9.** Assembly according to claim 8, wherein the fuel supply control device (10) is configured to calculate the second natural gas flow rate ($Q_{NGc}$) to be supplied to the lean gas supply line (12) on the basis of the measured lean gas flow rate ($Q_{SG}$) and on the basis of the ratio between the measured lean gas calorific value ($HV_{SG}$) and the natural gas calorific value ($HV_{NG}$).

**Patentansprüche**

**1.** Verfahren zum Zuführen von Brennstoff zu einer Verbrennungskammer (4) einer Gasturbinenanlage (1), welches die folgenden Verfahrensschritte aufweist:

- Zuführen von Schwachgas zu der Verbrennungskammer (4) durch eine Schwachgas-Zuführungsleitung (12) der Anlage (1);
- Zuführen von Erdgas zu der Verbrennungskammer (4) durch eine Erdgas-Zuführungsleitung (13) der Anlage (1), welche eine Führungs-Versorgungsleitung (23) aufweist;

wobei das Verfahren durch die Tatsache gekennzeichnet ist,
dass der Verfahrensschritt des Zuführens von Erdgas die folgenden Verfahrensschritte aufweist:

- Messen eines Schwachgas-Heizwertes ($HV_{SG}$);
- Berechnen von zumindest einem ersten Erdgas-Durchsatz ($Q_{NGp}$), der der Verbrennungskammer (4) durch die Führungs-Versorgungsleitung (23) auf der Basis des gemessenen Schwachgas-Heizwertes ($HV_{SG}$) zugeführt werden soll;
- Zuführen von zumindest dem Erdgas-Durchsatz ($Q_{NGp}$) an die Verbrennungskammer (4) durch die Führungs-Versorgungsleitung (23);
- Berechnen von einem zweiten Erdgas-Durchsatz ($Q_{NGc}$), welcher der Schwachgas-Zuführungsleitung (12) auf der Basis des gemessenen Schwachgas-Heizwertes ($HV_{SG}$) zugeführt werden soll;
- Zuführen des zweiten Erdgas-Durchsatzes ($Q_{NGc}$) an die Schwachgas-Zuführungsleitung (12) durch eine Verbindungsleitung (14), welche die Führungs-Versorgungsleitung (23) mit der Schwachgas-Zuführungsleitung (12) verbindet.

**2.** Verfahren nach Anspruch 1,
wobei der Verfahrensschritt des Zuführens von Erdgas die folgenden Verfahrensschritte aufweist:

- Messen eines Erdgas-Heizwertes ($HV_{NG}$);
- Messen des Schwachgas-Durchsatzes ($Q_{SG}$), welcher entlang der Schwachgas-Zuführungsleitung (12) strömt;
- Berechnen zumindest des ersten Erdgas-Durchsatzes ($Q_{NGp}$), welcher der Verbrennungskammer (4) durch die Führungs-Versorgungsleitung (23) zugeführt werden soll, auf der Basis des Schwachgas-Durchsatzes ($Q_{SG}$) und des Verhältnisses zwischen dem Schwachgas-Heizwert ($HV_{SG}$) und dem Erdgas-Heizwert ($HV_{NG}$).

**3.** Verfahren nach Anspruch 1 oder 2,
wobei der Verfahrensschritt des Zuführens von Erdgas die folgenden Verfahrensschritte aufweist:

- Messen eines Erdgas-Heizwertes ($HV_{NG}$);
- Messen des Schwachgas-Durchsatzes ($Q_{SG}$), welcher entlang der Schwachgas-Zuführungsleitung (12) strömt;
- Berechnen des zweiten Erdgas-Durchsatzes ($Q_{NGc}$), welcher der Schwachgas-Zuführungsleitung (12) zugeführt werden soll, und zwar auf der Basis des Schwachgas-Durchsatzes ($Q_{SG}$) und des Verhältnisses zwischen dem Schwachgas-Heizwert ($HV_{SG}$) und dem Erdgas-Heizwert ($HV_{NG}$).

**4.** Anordnung zum Zuführen von Brennstoff zu einer Verbrennungskammer (4) einer Gasturbinenanlage (1), die Folgendes aufweist:

- einen Brennstoff-Zuführungskreis (9), welcher eine Schwachgas-Zuführungsleitung (12) und eine Erdgas-Zuführungsleitung (13) aufweist, welche eine Führungs-Versorgungsleitung (23) aufweist;
- eine Brennstoff-Zuführungssteuerungseinrichtung (10);

wobei die Anordnung (6) durch die Tatsache gekennzeichnet ist,
dass die Schwachgas-Zuführungsleitung (12) zumindest eine erste Einrichtung (18) zum Messen eines Schwachgas-Heizwertes (HV$_{SG}$) aufweist, und dass sie durch die Tatsache gekennzeichnet ist, dass die Brennstoffzuführungs-Steuerungseinrichtung (10) dazu ausgebildet ist, auf der Basis des Schwachgas-Heizwertes (HV$_{SG}$), der von der ersten Einrichtung (18) gemessen worden ist, zumindest einen ersten Erdgas-Durchsatz (Q$_{NGp}$) zu berechnen, der der Verbrennungskammer (4) durch die Führungs-Versorgungsleitung (23) zugeführt werden soll;

wobei die Brennstoffzuführungs-Steuerungseinrichtung (10) dazu ausgebildet ist, auf der Basis des Schwachgas-Heizwertes (HV$_{SG}$), der von der ersten Einrichtung (18) gemessen worden ist, einen zweiten Erdgas-Durchsatz (Q$_{NGc}$) zu berechnen, der der Schwachgas-Zuführungsleitung (12) zugeführt werden soll;

wobei der Brennstoff-Zuführungskreis (9) eine Verbindungsleitung (14) aufweist, welche die Führungs-Versorgungsleitung (23) mit der Schwachgas-Zuführungsleitung (12) verbindet, wobei der zweite Erdgas-Durchsatz (Q$_{NGc}$) der Schwachgas-Zuführungsleitung (12) durch die Verbindungsleitung (14) zugeführt wird.

**5.** Anordnung nach Anspruch 4,
wobei die Erdgas-Zuführungsleitung (13) eine zweite Einrichtung (25) zum Messen einer Erdgas-Zusammensetzung (COMP$_{NG}$) aufweist.

**6.** Anordnung nach Anspruch 5,
wobei die Brennstoffzuführungs-Steuerungseinrichtung (10) ein Heizwert-Berechnungsmodul (35) aufweist, das dazu ausgelegt ist, den Erdgas-Heizwert (HV$_{NG}$) auf der Basis der Erdgas-Zusammensetzung (COMP$_{NG}$) zu berechnen, die von der zweiten Einrichtung (25) gemessen worden ist.

**7.** Anordnung nach einem der Ansprüche 4 bis 6,
wobei die Schwachgas-Zuführungsleitung (12) eine dritte Einrichtung (19) zum Messen eines Schwachgas-Durchsatzes (Q$_{SG}$) aufweist, der entlang der Schwachgas-Zuführungsleitung (12) strömt.

**8.** Anordnung nach Anspruch 7, der von Anspruch 6 abhängt,
wobei die Brennstoffzuführungs-Steuerungseinrichtung (10) dazu ausgebildet ist, den ersten Erdgas-Durchsatz (Q$_{NGp}$) zu berechnen, der durch die Führungs-Versorgungsleitung (23) der Verbrennungskammer (4) zugeführt werden soll, und zwar auf der Basis des gemessenen Schwachgas-Durchsatzes (Q$_{SG}$) und auf der Basis des Verhältnisses zwischen dem gemessenen Schwachgas-Heizwert (HV$_{SG}$) und dem Erdgas-Heizwert (HV$_{NG}$).

**9.** Anordnung nach Anspruch 8,
wobei die Brennstoffzuführungs-Steuerungseinrichtung (10) dazu ausgebildet ist, den zweiten Erdgas-Durchsatz (Q$_{NGc}$) zu berechnen, der der Schwachgas-Zuführungsleitung (12) zugeführt werden soll, und zwar auf der Basis des gemessenen Schwachgas-Durchsatzes (Q$_{SG}$) und auf der Basis des Verhältnisses zwischen dem gemessenen Schwachgas-Heizwert (HV$_{SG}$) und dem Erdgas-Heizwert (HV$_{NG}$).

**Revendications**

**1.** Procédé d'alimentation en combustible d'une chambre de combustion (4) d'une installation à turbine à gaz (1) comprenant les étapes de :

- alimentation en gaz pauvre de la chambre de combustion (4) via une canalisation d'alimentation en gaz pauvre (12) de l'installation (1) ;
- alimentation en gaz naturel de la chambre de combustion (4) via une canalisation d'alimentation en gaz naturel (13) de l'installation (1), qui comprend une canalisation de distribution pilote (23) ;
le procédé étant **caractérisé par le fait que** l'étape d'alimentation en gaz naturel comprend les étapes de :
- mesure d'un pouvoir calorifique de gaz pauvre (HV$_{SC}$) ;
- calcul d'au moins un premier débit de gaz naturel (Q$_{NGp}$) devant alimenter la chambre de combustion (4) via la canalisation de distribution pilote (23) sur la base du pouvoir calorifique de gaz pauvre (HV$_{SC}$) mesuré ;
- alimentation en au moins le premier débit de gaz naturel (Q$_{NGp}$) de la chambre de combustion (4) via la canalisation de distribution pilote (23) ;
- calcul d'un second débit de gaz naturel (Q$_{NGc}$) devant alimenter la canalisation d'alimentation en gaz pauvre (12) sur la base du pouvoir calorifique de gaz pauvre (HV$_{SG}$) mesuré ;
- alimentation en le second débit de gaz naturel (Q$_{NGc}$) de la canalisation d'alimentation en gaz pauvre (12) via une conduite de raccordement (14), qui raccorde la canalisation de distribution pilote (23) à la canalisation d'alimentation en gaz pauvre (12).

**2.** Procédé selon la revendication 1, dans lequel l'étape d'alimentation en gaz naturel comprend les étapes de :

- mesure d'un pouvoir calorifique de gaz naturel (HV$_{NG}$) ;
- mesure du débit de gaz pauvre (Q$_{SG}$) qui s'écoule le long de la canalisation d'alimentation en gaz pauvre (12) ;

- calcul d'au moins le premier débit de gaz naturel ($Q_{NGp}$) devant alimenter la chambre de combustion (4) via la canalisation de distribution pilote (23) sur la base du débit de gaz pauvre ($Q_{SG}$) et du rapport entre le pouvoir calorifique de gaz pauvre ($HV_{SG}$) et le pouvoir calorifique de gaz naturel ($HV_{NG}$).

3. Procédé selon la revendication 1 ou 2, dans lequel l'étape d'alimentation en gaz naturel comprend les étapes de :

    - mesure d'un pouvoir calorifique de gaz naturel ($HV_{NG}$) ;
    - mesure du débit de gaz pauvre ($Q_{SG}$) qui s'écoule le long de la canalisation d'alimentation en gaz pauvre (12) ;
    - calcul du second débit de gaz naturel ($Q_{NGc}$) devant alimenter la canalisation d'alimentation en gaz pauvre (12) sur la base du débit de gaz pauvre ($Q_{SG}$) et du rapport entre le pouvoir calorifique de gaz pauvre ($HV_{SG}$) et le pouvoir calorifique de gaz naturel ($HV_{NG}$).

4. Ensemble d'alimentation en combustible d'une chambre de combustion (4) d'une installation à turbine à gaz (1) comprenant :

    - un circuit d'alimentation en combustible (9) comprenant une canalisation d'alimentation en gaz pauvre (12) et une canalisation d'alimentation en gaz naturel (13), qui comprend une canalisation de distribution pilote (23) ;
    - un dispositif de commande d'alimentation en combustible (10) ;

l'ensemble (6) étant **caractérisé par le fait que** la canalisation d'alimentation en gaz pauvre (12) comprend au moins un premier dispositif (18) destiné à mesurer un pouvoir calorifique de gaz pauvre ($HV_{SG}$) et **par le fait que** le dispositif de commande d'alimentation en combustible (10) est configuré pour calculer, sur la base du pouvoir calorifique de gaz pauvre ($HV_{SG}$) mesuré par le premier dispositif (18), au moins un premier débit de gaz naturel ($Q_{NGp}$) devant alimenter la chambre de combustion (4) via la canalisation de distribution pilote (23) ; dans lequel le dispositif de commande d'alimentation en combustible (10) est configuré pour calculer, sur la base du pouvoir calorifique de gaz pauvre ($HV_{SG}$) mesuré par le premier dispositif (18), un second débit de gaz naturel ($Q_{NGc}$) devant alimenter la canalisation d'alimentation en gaz pauvre (12) ; le circuit d'alimentation en combustible (9) comprenant une conduite de raccordement (14) qui raccorde la canalisation de distribution pilote (23) à la canalisation d'alimentation en gaz pauvre (12), le second débit de gaz naturel ($Q_{NGc}$) alimentant la canalisation d'alimentation en gaz pauvre (12) via la conduite de raccordement (14).

5. Ensemble selon la revendication 4, dans lequel la canalisation d'alimentation en gaz naturel (13) comprend un deuxième dispositif (25) destiné à mesurer une composition de gaz naturel ($COMP_{NG}$).

6. Ensemble selon la revendication 5, dans lequel le dispositif de commande d'alimentation en combustible (10) comprend un module de calcul de pouvoir calorifique (35) configuré pour calculer le pouvoir calorifique de gaz naturel ($HV_{NG}$) sur la base de la composition de gaz naturel ($COMP_{NG}$) mesurée par le deuxième dispositif (25).

7. Ensemble selon l'une quelconque des revendications 4 à 6, dans lequel la canalisation d'alimentation en gaz pauvre (12) comprend un troisième dispositif (19) destiné à mesurer un débit de gaz pauvre ($Q_{SG}$) qui s'écoule le long de la canalisation d'alimentation en gaz pauvre (12).

8. Ensemble selon la revendication 7 dépendant de la revendication 6, dans lequel le dispositif de commande d'alimentation en combustible (10) est configuré pour calculer le premier débit de gaz naturel ($Q_{NGp}$) devant alimenter la chambre de combustion (4) via la canalisation de distribution pilote (23) sur la base du débit de gaz pauvre ($Q_{SG}$) mesuré et sur la base du rapport entre le pouvoir calorifique de gaz pauvre ($HV_{SG}$) mesuré et le pouvoir calorifique de gaz naturel ($HV_{NG}$).

9. Ensemble selon la revendication 8, dans lequel le dispositif de commande d'alimentation en combustible (10) est configuré pour calculer le second débit de gaz naturel ($Q_{NGc}$) devant alimenter la canalisation d'alimentation en gaz pauvre (12) sur la base du débit de gaz pauvre ($Q_{SG}$) mesuré et sur la base du rapport entre le pouvoir calorifique de gaz pauvre ($HV_{SG}$) mesuré et le pouvoir calorifique de gaz naturel ($HV_{NG}$).

Fig. 1

9

$COMP_{NG}$  $Q_{SG}$

$HV_{SG}$

35 — CALORIFIC VALUE CALCULATION

THERMAL POWER CALCULATION — 36

$HV_{NG}$  $TP_{SG}$

38 — PILOT VALVE CONTROL  $HV_{SG}$

— 10

$S_{NGP_P}$  $S_{NGS_C}$

Fig. 2

EP 2 459 933 B1

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003056517 A

- EP 1649219 B